# EUROPEAN PATENT APPLICATION

(11) **EP 4 760 387 A1**
(43) Date of publication of application: **17.06.2026**
(21) Application number: 25214578.4
(22) Date of filing: 10.11.2025
(51) Int. Cl.: G03B 17/55, H04N 23/51

(54) **VIDEO CAMERA HOUSING**

(30) Priority: 11.12.2024 IT 202400028122
(71) Applicant: Inprotec Irt S.r.l., 20092 Cinisello Balsamo (MI) (IT)
(72) Inventor: BETTI, Luciano Valentino, 20811 CESANO MADERNO MB (IT); PIETRIBIASI, Paolo, 20835 MUGGIO' MB (IT); RICCA, Roberto, 20054 SEGRATE MI (IT)
(74) Representative: Modiano, Micaela Nadia

(57) **Abstract**

A video camera housing (1), comprising a housing body (2) adapted to accommodate a video camera (3); housing body (2) is provided internally with ventilation means (6, 8) and data/image transmission means, the ventilation means and the data/image transmission means being powered by a battery inside the housing body (2).

## Description

The present invention relates to a video camera housing. More specifically, the invention relates to a housing for an industrial video camera of the infrared and/or visible spectrum type.

As is known, in the metallurgy sector and in the sector of industrial molding processes, infrared video cameras and/or visible spectrum video cameras are used which are inserted in protective housings with cabled connections for power, data and cooling. The cables for powering the data/image communication connections and the cooling pipes for cooling the video camera are often the weak point of the structure in terms of breakage of the wiring.

Furthermore, housings containing video cameras are often moved around by robots, which pick up the housing and move it in order to perform a thermal and/or visual check of a given portion of a plant.

This operation however is often hindered by the presence of cables which do not allow the robot to move the video camera housing sufficiently, with the problem of causing breakages to the wiring as well.

The aim of the present invention is to provide a video camera housing that makes it possible to eliminate wiring and external physical connections in general.

Within this aim, an object of the present invention is to provide a video camera housing that can be easily moved around by a robot, without hindrance from external wiring.

Another object of the present invention is to provide a video camera housing that does not require external cooling pipes.

Another object of the present invention is to provide a video camera housing that does not require cables for power supply and data/image communication connections.

Another object of the present invention is to provide a video camera housing that is highly reliable, easily and practically implemented and at low cost.

This aim and these and other objects which will become more apparent hereinafter are achieved by a video camera housing, comprising a housing body adapted to accommodate a video camera, characterized in that said housing body is provided internally with ventilation means and data/image transmission means, said ventilation means and said data/image transmission means being powered by a battery inside said housing body.

Further characteristics and advantages of the invention will become more apparent from the detailed description of a preferred, but not exclusive, embodiment of the video camera housing according to the present invention, illustrated by way of non-limiting example in the accompanying drawings wherein:

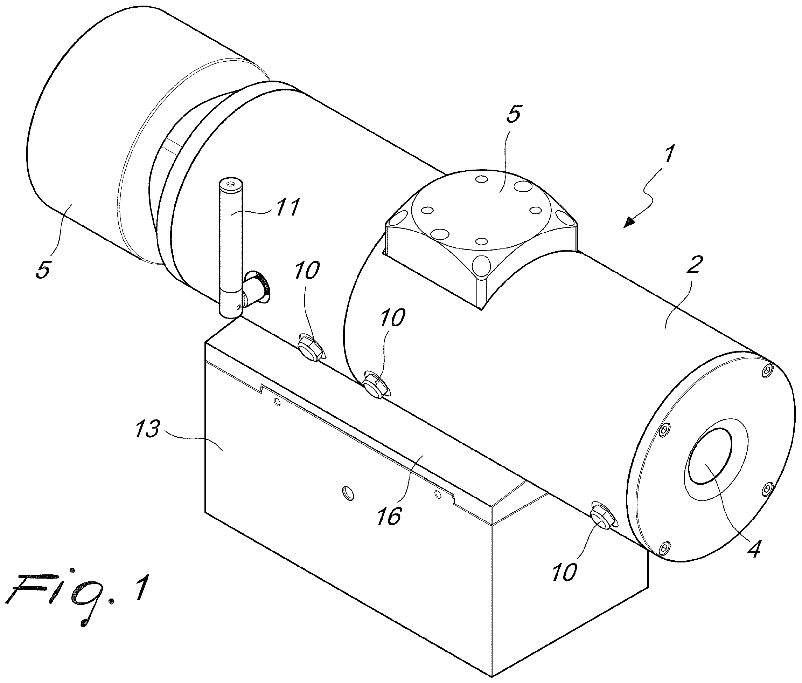

Figure 1 is a perspective view of the video camera housing according to the present invention;

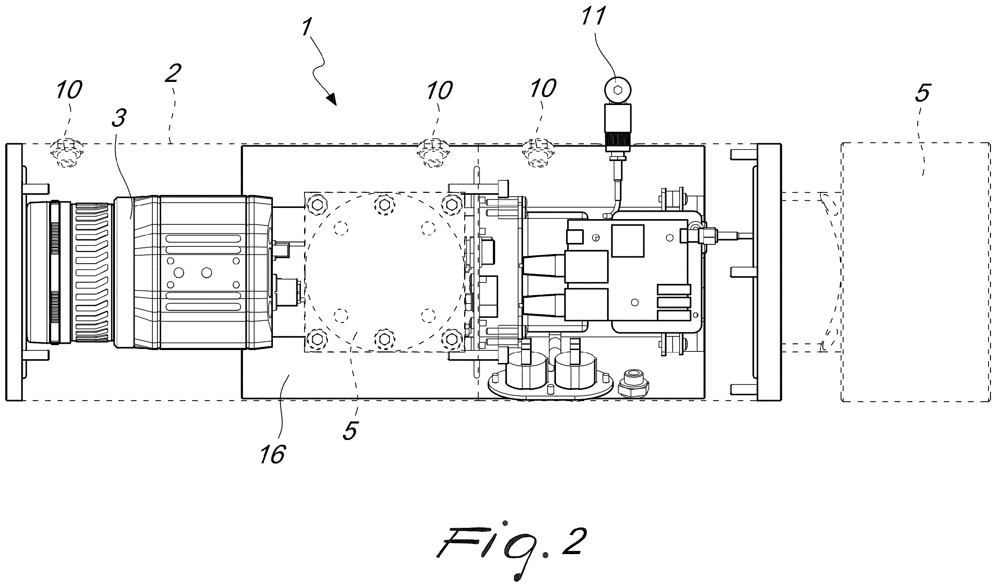

Figure 2 is a plan view of the video camera housing according to the present invention with some parts shown transparent;

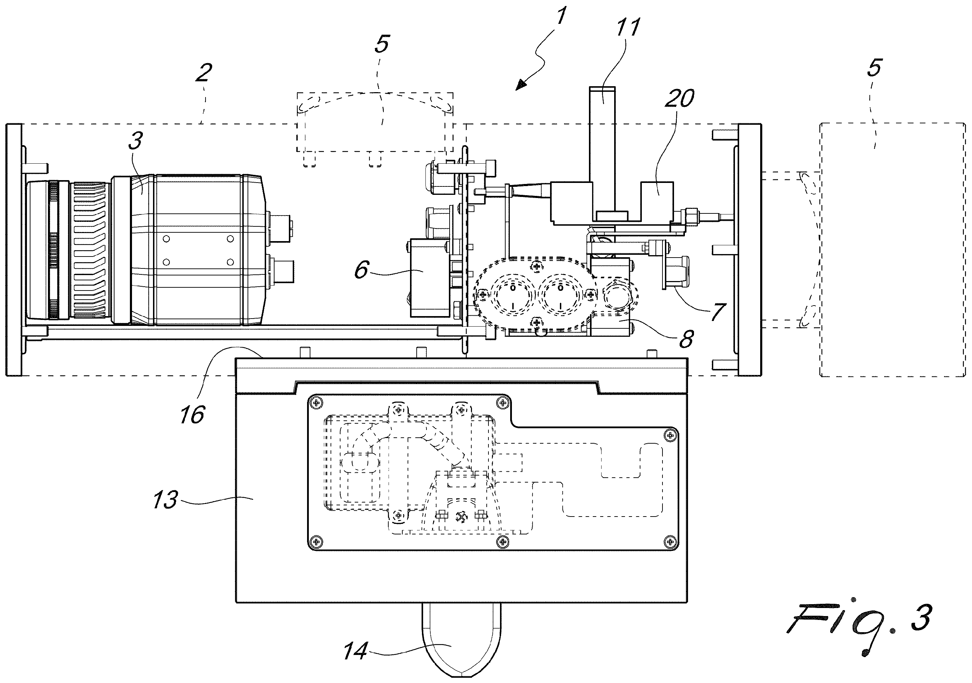

Figure 3 is a side view of the video camera housing according to the present invention with some parts shown transparent;

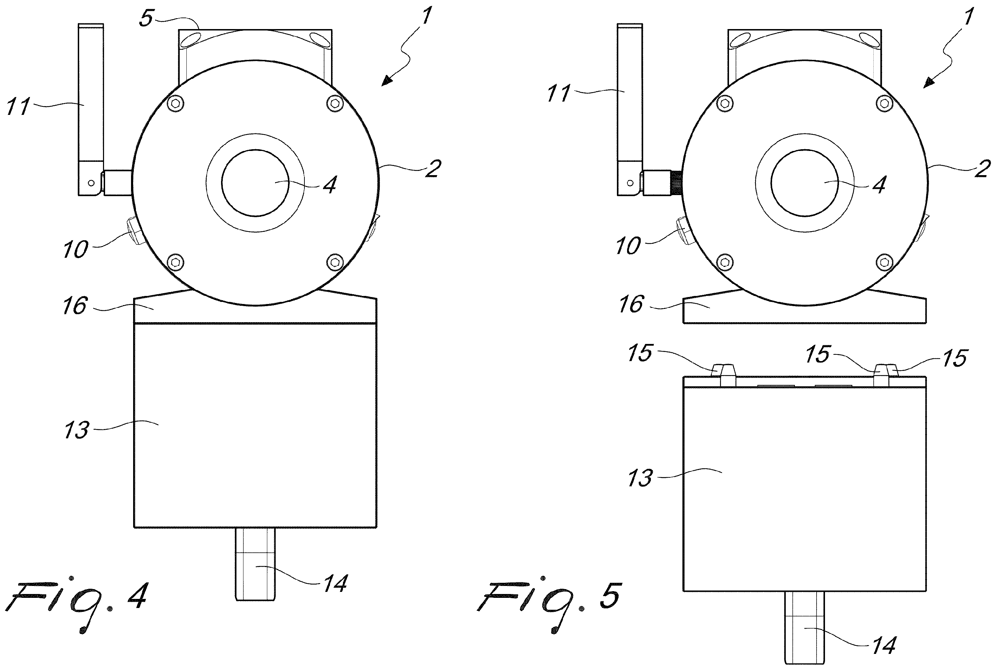

Figure 4 is a front elevation view of the video camera housing according to the present invention;
Figure 5 is a front elevation view of the video camera housing according to the present invention, detached from its charging base.

With reference to the figures, the video camera housing according to the present invention, generally designated by the reference numeral 1, comprises a body 2, for example with a cylindrical configuration, which is adapted to accommodate a video camera 3 and has at one of its ends an opening 4 to allow the lens of the video camera to face outward.

Conveniently, the body 2 is provided with at least one grip element 5 and preferably a pair of grip elements 5 arranged for example on the side surface of the body 2 and at a base thereof, opposite with respect to the face containing the opening 4 for the lens of the video camera 3 to face outward.

Conveniently, the body 2 accommodates ventilation means 6 inside it, which are conveniently powered by an internal battery. Ventilation means 8 are further provided for cooling the power supply means 7.

The body 2 is provided with adapted air recirculation vents 10 arranged on its outer surface and a wireless LAN antenna 11 which protrudes from the body 2, for connection with the outside world.

Furthermore, inside the body 2 there are data/image transmission means, for example constituted by a wireless LAN card 20.

The housing 1 is conveniently charged by way of a charging base 13 which has a mains power plug 14 and calibrated guide pins 15 which make it possible to couple the body 2 to the charging base 13.

More specifically, the body 2 is provided in a lower region with a base plate 16 which allows the body 2 to be placed on the charging base 13.

In substance, therefore, the housing 1 according to the present invention is completely autonomous in that it is provided with a wireless LAN card 20 and internal ventilation means 6, 8, which are powered by at least one battery inside the body 2, as well as with grip elements 5 for a mechanical arm of a robot.

This makes it possible to completely eliminate external wiring, data/image connection lines, and cooling pipes, which are present in conventional housings.

The housing thus devised can be easily moved around by a robot, without any problems of breakage of wiring and the like.

In practice it has been found that the video camera housing according to the present invention fully achieves the set aim and objects, in that it makes it possible for the video camera to be completely autonomous from the point of view of power supply and data transmission, as well as internal cooling.

The housing thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in Italian Patent Application No. 102024000028122 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A video camera housing (1), comprising a housing body (2) adapted to accommodate a video camera, **characterized in that** said housing body (2) is provided internally with ventilation means (6, 8) and data/image transmission means, said ventilation means (6, 8) and said data/image transmission means being powered by a battery inside said housing body (2).

2. The housing according to claim 1, **characterized in that** it comprises a video camera (3) accommodated within said housing body (2).

3. The housing according to claim 1, **characterized in that** said data/image transmission means comprise a wireless LAN card (20) accommodated within said body (2) and an antenna (11) which protrudes from said housing body.

4. The housing according to claim 1, **characterized in that** said housing body (2) has, on a side face thereof, an opening (4) to allow a lens of said video camera (3) to face outward.

5. The housing according to claim 1, **characterized in that** it comprises at least one grip element (5) for enabling said housing body (2) to be moved by a mechanical arm of a robot.

6. The housing according to claim 5, **characterized in that** it comprises a pair of grip elements (5) arranged at the side surface of said housing body (2) and at a side face thereof, respectively.

7. The housing according to one or more of the preceding claims, **characterized in that** it comprises a charging base (13) adapted to be coupled to said housing body (2) for charging said housing body (2) from the mains.

8. The housing according to one or more of the preceding claims, **characterized in that** said charging base (13) comprises guide pins (15) which are calibrated for coupling with a base plate (16) of said housing body (2).

9. The housing according to one or more of the preceding claims, **characterized in that** it comprises a mains power plug (14).

10. The housing according to one or more of the preceding claims, **characterized in that** said housing body (2) has, on its side surface, at least one air recirculation vent (10).
